# EUROPÄISCHE PATENTSCHRIFT

(11) **EP 0 838 403 B1**
(45) Veröffentlichungstag und Bekanntmachung des Hinweises auf die Patenterteilung: **08.03.2000**
(21) Anmeldenummer: 97117202.8
(22) Anmeldetag: 04.10.1997
(51) Int. Cl.: B65B 61/06

(54) **Verfahren und Vorrichtung zum Durchtrennen von Schutzfolie im Bereich überklebter Fugen und Sicken von Karosserien**
Method and apparatus for cutting protective film in the area covering joints and ribs of car bodies
Procédé et dispositif pour couper un film protecteur dans la région couvrant des joints et des nervures de carrosseries de véhicules

(30) Priorität: 17.10.1996 DE 19642831; 23.05.1997 DE 29622887 U; 07.06.1997 DE 19724040
(43) Veröffentlichungstag der Anmeldung: 29.04.1998
(73) Patentinhaber: DaimlerChrysler AG, 70567 Stuttgart (DE)
(72) Erfinder: Habisreitinger, Uwe, 72250 Freudenstadt (DE); Nordmann, Bernhard, 71034 Böblingen (DE)

(56) Entgegenhaltungen:
- PATENT ABSTRACTS OF JAPAN vol. 018, no. 483 (M-1670), 8.September 1994 & JP 06 156339 A (HONDA MOTOR CO LTD), 3.Juni 1994,

## Beschreibung

Die Erfindung betrifft ein Verfahren und eine Vorrichtung zum Durchtrennen von Schutzfolie im Bereich überklebter Fugen und Sicken, insbesondere von Kfz-Karosserien.

In der Serienfertigung vieler Pkw-Hersteller müssen die Fahrzeuge für den Versand derart präpariert werden, daß sie keinen Schaden nehmen, insbesondere daß die Lackierung durch Lagerung und Witterungseinflüsse nicht beeinträchtigt wird. Werden für die Kundenüberführung Bahnfahrten oder gar Schiffstransporte nötig, so hat man die Fahrzeuge hierfür mit einer Wachsschutzschicht überzogen, die vor Kundenauslieferung wieder entfernt werden mußte. Das rückstandsfreie Entfernen des Schutzwachses war nicht nur eine personalintensive Arbeit, sondern belastete auch Mensch und Umwelt wegen der dabei eingesetzten Lösungsmittel. Deshalb ist man neuerdings dazu übergegangen, die Karosserien während des Transportes durch selbsthaftende Folien zu schützen, wobei man jedoch lediglich die witterungs- und ablagerungsgefährdeten, im wesentlichen horizontalliegenden Oberflächenpartien der Karosserie so geschützt hat. Diese Schutzart ist zwar sehr wirkungsvoll, aber auch relativ teuer, so daß man sie nicht nur als Schutz während des Transportes, sondern auch als Schutz während der Fahrzeugmontage vorgesehen und demgemäß die Schutzfolie bereits vor der Endmontage des Fahrzeuges, d.h. unmittelbar nach der Lackierung der Karosserie aufgebracht hat.

Um die Schutzfolien sorgfältig aufbringen zu können, mußten die Folienzuschnitte bisher von mehreren Personen gehalten, über das Fahrzeug gebracht, ausgerichtet und an die zugehörigen Oberflächenpartien angelegt werden. Trotz des hohen Personalaufwandes ließen sich nicht immer Falten oder Blasen beim Applizieren der Schutzfolie vermeiden. Beim anschließenden Freischneiden der Bereiche für Zubauteile kam es häufig zu Beschädigungen der Lackierung, so daß aufwendige Nacharbeiten erforderlich wurden. Beim bisherigen manuellen Applizieren der Schutzfolie ist man folgendermaßen vorgegangen: Zunächst wurde von mindestens einer oder zwei Personen ein größenmäßig auf eine Oberflächenpartie abgestimmtes, rechteckiges Stück einer Schutzfolie von einer Vorratsrolle abgezogen und das hintere Ende von einer oder zwei weiteren Personen gehalten und abgeschnitten. Dieses Schutzfolienstück wurde von den zwei, vier oder mehreren Personen freihändig mit der selbsthaftenden Seite nach unten weisend frei ausgespannt, so über die Karosserie verbracht, dort in Horizontallage auf die zugehörige Oberflächenpartie lagegerecht abgesenkt, daran mehr oder weniger falten- und blasenfrei angelegt und durch Streichen mit einem weichen, gleitfähigen Gegenstand, z.B. einem ausgesteiften Filzstück angedrückt.

Im Bereich überklebter Fugen bzw. Spalte zu angrenzenden Karosserieteilen wie Kotflügel oder Türen wurde die Schutzfolie mit einem Messer manuell durchschnitten und die Schnittränder von Hand angedrückt, um die Durchführung montagerelevanter Arbeiten zu gestalten. Das Hantieren mit einem scharfkantigen Messer in direkter Umgebung zur lackierten Karosserieoberfläche hat in der Hektik trotz laufender Übung immer wieder zu Lackbeschädigungen und zur aufwendigen Nacharbeit geführt. Insbesondere bei Karosserieformen, die beispielsweise im Bereich der Motorhaube Sicken aufweisen, konnte ein manuelles Durchtrennen des die Sicke überspannenden Folienabschnittes bisher nur nach Unterlegen eines Folienstreifens erfolgen, da die Gefahr einer Lackbeschädigung in dem Sickenbereich zu groß war.

Dieser Stand der Technik entspricht der Fertigungspraxis zumindest bei der Anmelderin; nachdem die USA aus Umweltschutzgründen keine Schutzwachsungen im Fahrzeugversand mehr zulassen, sind wahrscheinlich auch andere Fahrzeughersteller zu einem ähnlichen Folienschutzsystem für deren Fahrzeuge während des Versandes übergegangen. Eine druckschriftliche Veröffentlichung darüber ist der Anmelderin jedoch nicht bekannt.

Aus der JP 06 156 339 A ist ferner eine Vorrichtung zum Applizieren von selbsthaftender Folie auf Oberflächenpartien von Kfz.- Karosserien bekannt, wobei die überragenden Randpartien der aufgebrachten Folie durch ein an einem Industrieroboter angeordnetes Schneidwerkzeug abgetrennt werden.

Die Anmelderin beschreibt in der deutschen Patentanmeldung 196 42 831.9 (= EP 838 398) ein automatisiertes Applikationsverfahren und eine entsprechende Vorrichtung zum Applizieren von selbsthaftender Schutzfolie auf Oberflächenpartien von Kfz-Karosserien, bei dem von einem robotergeführten Spannrahmen ein abgemessenes Stück Schutzfolie von einer Vorratsrolle abgezogen und faltenfrei und unter einer Eigenspannung in den Spannrahmen übernommen und von der Vorratsrolle abgeschnitten und nach Anbringen lagegerechter Perforationslinien mittels eines ebenfalls robotergeführten Perforationswerkzeugs durch den Spannrahmenroboter lagegerecht auf die zugehörige Oberflächenpartie der Karosserie abgesenkt und falten- und blasenfrei auf sie angedrückt wird.

Der vorliegenden Erfindung liegt die Aufgabe zugrunde, ein Verfahren zum Durchtrennen von Schutzfolie im Bereich überklebter Fugen und Sicken, insbesondere von Kfz-Karosserien, bereitzustellen, das die eintönige Handarbeit durch eine Automatisierung ersetzt, zur Vermeidung von Lackbeschädigungen beiträgt und durch das außerdem Personalkosten eingespart werden können. Insbesondere soll das bereitzustellende Verfahren bzw. die bereitzustellende Vorrichtung zu einer Verwendung mit der in der vorstehend erwähnten deutschen Patentanmeldung 196 42 831.9 beschriebenen Erfindung geeignet sein.

Zur Lösung dieser Aufgabe werden die Verfahren mit den Merkmalen der Ansprüche 1 bzw. 9 sowie die Vorrichtungen mit den Merkmalen der Ansprüche 11 bzw. 24 vorgeschlagen.

Bei der automatisierten Folienapplikation wird von einem Folienvorrat beispielsweise durch einen robotergeführten Spannrahmen ein abgemessenes Folienstück abgezogen und faltenfrei und unter einer gewissen Eigenspannung in den Spannrahmen übernommen. In diesen ausgespannten und dank des Spannrahmens fast wie ein starres Werkstück handhabbaren Folienzuschnitt werden vor der Folienapplikation mit einem ebenfalls robotergeführten Perforationswerkzeug lagegerecht Perforationslinien in den Folienzuschnitt gelegt, die ein montagebedingtes Entfernen bestimmter Folienbereiche durch Abreißen entlang der Perforationslinien ermöglichen. Erst danach wird der mit den Perforationslinien versehene Folienzuschnitt durch den Spannrahmenroboter lagegerecht auf die zugehörige Oberflächenpartie der Karosserie abgesenkt und falten- und blasenfrei auf sie angedrückt. Im Bereich überklebter Fugen und Sicken wird die Folie erfindungsgemäß mittels eines robotergeführten Messers durchtrennt, wobei die Schnittränder beispielsweise mit einer rotierenden Bürste oder einer Luftdüse angedrückt werden. Die bei der späteren Montage störenden Schutzfolienteile im Bereich von Zubauteilen werden entlang perforierter Reißlinien - vorzugsweise manuell - abgezogen.

Die erfindungsgemäße Vorrichtung zeichnet sich durch einen frei programmierbaren Industrieroboter (Aufschneidroboter) mit mindestens fünf Bewegungsfreiheitsgraden aus, an dessen Arbeitsarm ein Schneid- und Andrück-Werkzeug angebracht ist. Als Schneidwerkzeug ist ein Messer mit einer Klinge zum Durchtrennen der Schutzfolie im Bereich überklebter Fugen und Sicken vorgesehen. Zum Andrücken der Schnittränder der Schutzfolie ist ein geeignetes Andrückwerkzeug vorgesehen, das dem Schneidwerkzeug in Schneid- und Bewegungsrichtung nachgeordnet ist. Dabei handelt es sich erfindungsgemäß entweder um eine rotierende Bürste, die auf die mit der Schutzfolie beklebten Karosserieteile aufsetzbar ist, oder um eine auf die Schnittränder gerichtete Luftdüse, deren vorzugsweise diffuser Luftstrahl die Ränder andrückt.

Durch den Einsatz des Aufschneidroboters ist eine präzise Führung des Messers zum Durchtrennen der Schutzfolie gewährleistet, so daß die Gefahr einer Lackbeschädigung stark verringert wird. Der Aufschneidroboter stößt die an seinem Arbeitsarm angeordnete Messerklinge im Bereich einer überklebten Fuge bzw. Sicke durch die Schutzfolie und verfährt das Messer in Richtung einer durch die Fuge bzw. Sicke vorgegebenen Schneid- und Bewegungsrichtung solange, bis das Ende der Fuge bzw. Sicke erreicht ist. Durch die erfindungsgemäß dem Messer nachgeordnete rotierende Bürste, die direkt oder durch das Absenken des Arbeitsarms auf dem mit Schutzfolie beklebten Karosserieteil aufgesetzt wird, werden die Schnittränder der durchtrennten Schutzfolie an die Karosserie angedrückt, so daß ein Ablösen der Folie aufgrund nicht an der Karosserie haftender Schutzfolienränder ausgeschlossen wird. In anderer Ausführung der Erfindung werden die Schnittränder mittels einer dem Messer nachgeordneten Luftdüse, die einen auf die Schutzfolie gerichteten diffusen Luftstrom ausstrahlt, an die Karosserie angedrückt.

In Ausgestaltung der Erfindung weisen die Flachseiten der Messerklinge jeweils eine Kunststoffbeschichtung auf. Durch eine derartige Beschichtung werden Beschädigungen der lackierten Karosserie durch einen Kontakt des harten Klingenwerkstoffes mit der Lackierung bei einer eventuellen leichten Abweichung der Messerführungsrichtung von der Fugenausrichtung vermieden. Der beiderseits auf der Klinge aufgebrachte Kunststoff sollte gute Gleiteigenschaften gegenüber ausgehärteten Fahrzeuglacken und gegenüber der zu applizierenden Schutzfolie besitzen.

In weiterer Ausgestaltung der Erfindung ist das Messer in dem Schneid- und Andrück-Werkzeug mittels einer Blattfeder quer zur Schneid- und Bewegungsrichtung elastisch aufgehängt. Durch diese erfindungsgemäße Ausgestaltung werden Ungenauigkeiten zwischen der Roboterführung des Messers und dem tatsächlichen Verlauf der Karosseriefuge bzw. -sicke ausgeglichen, da das Messer bei einem seitlichen Kontakt mit dem die Fuge begrenzenden Karosserieteil elastisch "ausweichen" kann. Vorteilhafterweise sind verstellbare Anschlagarme zur Beaufschlagung des Messers und/oder der Blattfeder quer zur Schneid- und Bewegungsrichtung vorgesehen, so daß beim Durchstechen der Schutzfolie das Messer durch Beaufschlagung mittels der Anschlagarme fixiert werden kann. Nach dem Einstechen des Messers und während des Schneidvorgangs wird die Beaufschlagung des Messers bzw. der Blattfeder durch die Anschlagarme aufgehoben, so daß der gewünschte Elastizitätseffekt bei einem seitlichen Kontakt des Messers mit Karosserieteilen eintritt.

In besonders vorteilhafter Ausgestaltung der Erfindung ist das Messer beim Schneidvorgang in Schneidrichtung nach hinten verschwenkbar angeordnet. Sollte das Messer beim Schneidvorgang in Schneidrichtung auf ein unvorhergesehenes Hindernis treffen, so wird es in Schneidrichtung nach hinten verschwenkt. Dieses Verschwenken wird von einem geeigneten Sensor wahrgenommen und bewirkt ein unmittelbares Zurückziehen des Messers oder des Arbeitsarms des Aufschneidroboters, so daß ein dem Messer in dessen Schneidbahn entgegenstehendes unvorhergesehenes und unerwünschtes Hindernis nicht zu einem Stillstand der Fertigungslinie führt. Vielmehr fährt der Aufschneidroboter zur nächsten Karosseriefuge bzw. -sicke und schneidet diese planmäßig auf. Nicht ordnungsgemäß durchtrennte Schutzfolien werden dann in einer nachgeordneten manuellen Überprüfungsstation nachbehandelt. Alternativ hierzu kann der Aufschneidroboter nach dem Zurückziehen des Messers die Stelle des Hindernis überspringen und hinter dem Hindernis das Messer erneut durch die Schutzfolie über der freizuschneidenden Fuge stechen, um mit dem Durchtrennen fortzuführen.

In besonders vorteilhafter Ausgestaltung ist das Messer senkrecht zur Folienebene sowie quer zur Schneid- und Bewegungsrichtung verstellbar an einem zweiachsigen Schwimmschlitten angeordnet. Der Schwimmschlitten ist seinerseits an dem Arbeitsarm des Roboters angeordnet und gestattet während der "Suchfahrt" vor Beginn des Schneidvorgangs eine Feineinstellung des Messers in z-Richtung, d.h. senkrecht zur Folienebene. Nach Beendigung dieser Suchfahrt wird der z-Schwimmschlitten festgesetzt und das Messer wird ausgefahren. Dieses Ausfahren kann sowohl durch Bewegung des Arbeitsarms des Aufschneidroboters senkrecht zur Folienebene als auch durch direktes Ausfahren des Messers vorgenommen werden. Daran schließt sich der Schneidvorgang an, wobei Ungenauigkeiten zwischen der robotergeführten Schneidbahn des Messers und der Karosseriefuge durch den y-Schwimmschlitten ausgeglichen werden.

In vorteilhafter Ausgestaltung ist das Schneid- und Andrück-Werkzeug in unterschiedliche Arbeitsstellungen versetzbar und eine dem Schneid- und Andrück-Werkzeug zugeordnete Meßeinrichtung zur Erfassung der Ist-Lage der freizuschneidenden Fugen oder Sicken der Karosserie innerhalb des Arbeitsraums des Aufschneidroboters ist vorgesehen.

Dazu ist die Meßeinrichtung beispielsweise ein an dem Schneid- und Andrück-Werkzeug angeordnetes Meßwerkzeug, und das Schneid- und Andrück-Werkzeug ist in unterschiedliche Arbeitsstellungen schwenkbar, wobei in einer ersten Schwenkstellung das Meßwerkzeug wirksam ist und in einer zweiten Schwenkstellung das Schneid- und Andrückwerkzeug. Das Meßwerkzeug kann dabei vorteilhafterweise optische und/oder akkustische Sensoren umfassen, mittels welcher die exakte Lage des freizuschneidenden Spaltes detektiert werden kann. Sobald die Ist-Lage des Spaltes ermittelt wurde, wird das Schneid- und Andrück-Werkzeug derart verschwenkt, daß das Messer auf die detektierte Ist-Lage des Spaltes ausgerichtet ist und der Schneidvorgang beginnen kann.

In anderer Ausgestaltung der Erfindung ist als Meßeinrichtung ein an einem zweiachsigen Schwimmschlitten senkrecht zur Folienebene sowie quer zur Schneid- und Bewegungsrichtung verstellbarer taktiler Taster vorgesehen. Dieser Taster kann durch den Roboterarm und/oder direkt auf die Karosserie heruntergefahren werden, wodurch der z-Schwimmschlitten (senkrecht zur Folienebene) ausgelenkt wird. Daraufhin führt der Roboter mit dem taktilen Taster eine im wesentlichen quer zur Fugenausrichtung verlaufende Bewegung durch. Sobald sich der Taster in dem Spalt der Fuge befindet, wird beim Weiterfahren des Roboters der y-Schwimmschlitten (quer zur Schneid- und Bewegungsrichtung) ausgelenkt, wobei der Taster in dem Spalt verharrt. Nach Beendigung der Suchfahrt wird der z-Schwimmschlitten festgesetzt. Durch die derart ermittelte Ist-Lage der freizuschneidenden Fuge kann nunmehr das Messer in die Ausgangsposition für den Schneidvorgang gebracht werden.

In besonders vorteilhafter Ausgestaltung der Erfindung ist das Messer an dem den Taster haltenden zweiachsigen Schwimmschlitten angeordnet und der Taster und das Messer sind senkrecht zur Folienebene verstellbar. Somit kann nach Beendigung der Suchfahrt das Messer einfach ausgefahren werden, wodurch es die den Spalt überdeckende Schutzfolie durchsticht, und der Taster wird eingefahren, so daß der Schneidvorgang durch die Roboterführung des Messers beginnen kann.

In anderer Ausgestaltung der Erfindung ist als Meßeinrichtung ein quer zur Schneid- und Bewegungsrichtung verschwenkbarer taktiler Taster vorgesehen. In dieser Ausgestaltung der Erfindung erfolgt eine Auslenkung des Tasters, sobald dieser bei der im wesentlichen quer zu dem freizuschneidenden Spalt verlaufenden Suchfahrt in den Fugenspalt eintritt. Die Auslenkung wird mittels eines geeigneten Sensors detektiert und ein Signal an den Aufschneidroboter übermittelt, der den Auslenkpunkt als Einstechpunkt für das Messer speichert. Eine einmal detektierte Auslenkung bzw. ein ermittelter Auslenkweg kann nach Speicherung auch für eine benachbarte Karosseriefuge bzw. -sicke verwendet werden.

In Ausgestaltung der Erfindung weist der taktile Taster eine abgerundete Tastspitze auf.

In anderer Ausgestaltung der Erfindung weist der taktile Taster eine Tastspitze mit einer dem Spalt angepaßten Tastrolle auf.

Zur weiteren Lösung der der Erfindung zugrundeliegenden Aufgabe wird eine Vorrichtung zum Durchtrennen von Schutzfolie im Bereich überklebter Fugen und Sicken mit den Merkmalen des Anspruches 14 vorgeschlagen. Demnach ist an dem Arbeitsarm eines Aufschneidroboters als Schneid- und Andrück-Werkzeug eine Luftdüse angeordnet, die zu einem diffusen Ausstrahlen von Heißluft geeignet ist, wobei die Temperatur der Heißluft beispielsweise mindestens der Schmelztemperatur des Kunststoffs der Schutzfolie entspricht. Die erfindungsgemäße Vorrichtung gestattet ein kontaktloses Durchtrennen von Schutzfolie im Bereich überklebter Fugen und Sicken, da durch die Heißluft ein Anschmelzen des Kunststoffs der Schutzfolie erfolgt und dieser im Bereich einer Fuge oder Sicke durch den Impuls des auftreffenden Luftstroms durchtrennt wird. Der besondere Vorteil dieser kontaktfreien Durchtrennung besteht darin, daß zum Andrücken der Schnittränder der Schutzfolie kein zusätzliches Andrück-Werkzeug notwendig ist, da durch den aus der Luftdüse austretenden Luftstrom die Schnittränder an die Karosserie bereits angedrückt werden. Da das Ausstrahlen der Heißluft aus der Luftdüse diffus erfolgt, d.h. daß es sich um einen nicht punktuell, sondern nur flächig gerichteten Luftstrahl handelt, ist es auch nicht unbedingt notwendig, eine zur Feinausrichtung der Luftdüse dienende Meßeinrichtung vorzusehen, da eventuelle kleine Abweichungen des frei zu schneidenden Spaltes von der Ist-Lage durch den diffusen Luftstrom ausgeglichen werden.

In Ausgestaltung der Erfindung ist in dem Bereich vor der Luftausstrittsöffnung der Luftdüse ein Dorn aus einem Material guter Wärmeleitfähigkeit angeordnet. Dieser Dorn ist vorteilhafterweise ausfahrbar und dient zum Durchtrennen von Schutzfolie insbesondere im Bereich von breiten Sicken, wenn der durch den Luftstrom auf die Schutzfolie ausgeübte Impuls aufgrund der Breite des unter der Folie liegenden Spaltes nicht ausreicht, um diese zu durchtrennen.

Die Erfindung ist anhand von Ausführungsbeispielen in der Zeichnung schematisch dargestellt und wird im folgenden unter Bezugnahme auf die Zeichnung ausführlich erläutert.

Figur 1 zeigt eine Seitenansicht einer erfindungsgemäßen robotergeführten Vorrichtung mit einem Schneid- und Andrück-Werkzeug und diesem zugeordneten Meßwerkzeug.

Figur 2a zeigt eine vergrößerte seitliche Darstellung einer teilweise mit Kunststoff beschichteten Messerklinge.

Figur 2b zeigt die Messerklinge der Figur 2a in frontaler Ansicht.

Figur 2c zeigt die Messerklinge der Figur 2b beim Durchtrennen von Schutzfolie im Bereich einer überklebten Fuge.

Figuren 3a und 3b zeigen eine schematische Darstellung in Seiten- und Frontansicht der erfindungsgemäßen Halterung eines Messers mittels einer Blattfeder.

Figur 4 zeigt eine schematische Darstellung einer erfindungsgemäßen Halterung eines Messers mittels eines zweiachsigen Schwimmschlittens.

Figuren 5a und 5b zeigen in schematischer Darstellung eine erfindungsgemäße Meßeinrichtung mit taktilem Taster während der Suchfahrt in Bewegung quer zu einer Fuge.

Figur 6 zeigt eine erfindungsgemäße Meßeinrichtung mit einem quer zur Fugenrichtung schwenkbar angeordneten taktilen Taster.

Figur 7 zeigt in stark schematisierter Darstellung das erfindungsgemäße Durchtrennen einer Schutzfolie im Bereich einer überklebten Fuge mittels einer Heißluftdüse.

Bei einer wie vorstehend bereits geschilderten automatisierten Applikation von Schutzfolie auf Teile von Kfz-Karosserien ist in der Fertigungslinie im Anschluß an die Andrückstation eine Aufschneidestation vorgesehen, in der überklebte Fugen zu beweglichen Karosserieteilen hin erfindungsgemäß automatisiert freigeschnitten werden können. In dieser Station kommen ein erfindungsgemäßes Verfahren bzw. eine erfindungsgemäße Vorrichtung zum Durchtrennen von Schutzfolie zum Einsatz.

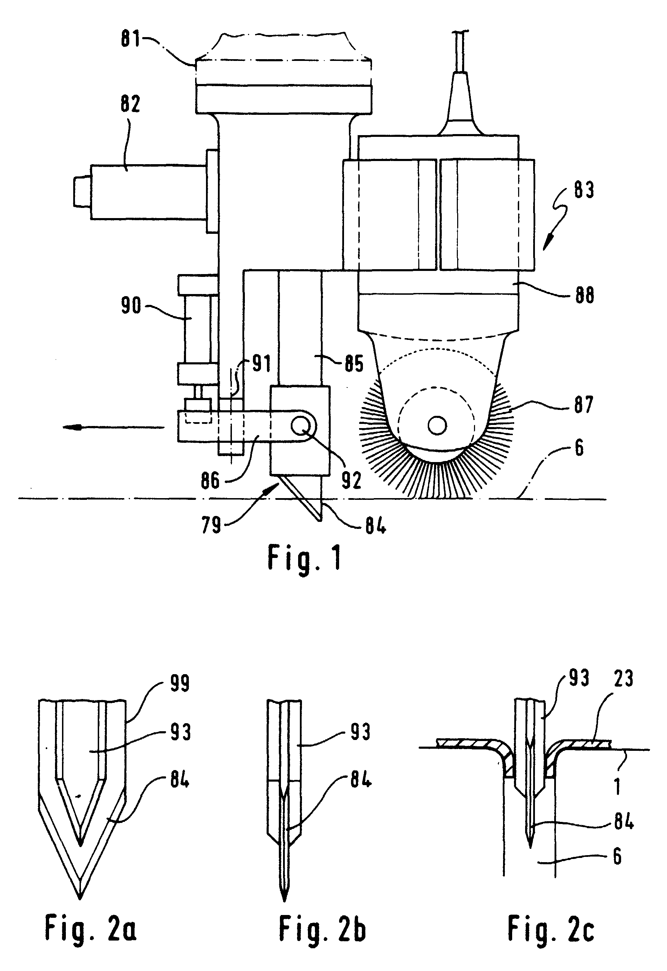

Ein erstes Ausführungsbeispiel einer erfindungsgemäßen Vorrichtung ist in Figur 1 dargestellt. Die erfindungsgemäße Vorrichtung umfaßt einen nicht näher dargestellten frei programmierbaren Industrieroboter (Aufschneidroboter) mit vorzugsweise sechs Freiheitsgraden für einen Arbeitsarm 81 und einer weiteren, siebten Bewegungsachse zum Verfahren des Aufschneidroboters entlang einer Bodenführung der Fertigungslinie. Nicht nur wegen der Meßaufgabe, sondern auch wegen der vorne und hinten an der Karosserie befindlichen, überklebten Fugen, an denen die Folie aufgeschnitten werden muß, ist der Aufschneidroboter mit einer Verfahrachse entlang der genannten Bodenführung ausgerüstet. Alternativ kann die Aufgabe von einem oder mehreren stationären Aufschneidrobotern ohne siebte Bewegungsachsen ausgeführt werden, wenn die Roboter nur Teilbereiche der Karosserie bearbeiten müssen.

In dem in Figur 1 dargestellten Ausführungsbeispiel ist an dem Arbeitsarm 81 des Aufschneidroboters ein in unterschiedliche Arbeitsstellungen schwenkbares Schneid- und Andrück-Werkzeug 83 mit daran angeordnetem Meßwerkzeug 82 angebracht. Beim Überführen der Karosserien von Station zu Station streut die tatsächliche Lage der Karosserien trotz einer mechanischen Fixierung der Förderschlitten an stationsseitigen Seiten- und Längsanschlägen in einem Toleranzfeld, welches für das Freischneiden der Fugen unzulässig groß ist. Diesen Lagetoleranzen der Karosserie sind noch gewisse Eigentoleranzen der Karosserie selber überlagert, die zwar für sich wesentlich kleiner als die Lagetoleranzen, aber beim Fugenfreischneiden zumindest in der Überlagerung nicht völlig vernachlässigbar sind. Deshalb muß vor dem Freischneiden der Fugen der Karosserie zunächst deren genaue Ist-Lage in Relation zum Aufschneidroboter an einigen wenigen Karosseriepunkten vorne und hinten ermittelt werden. Dieses Vermessen der Ist-Lage der Fugen kann durch ein stationäres dreidimensional arbeitendes Meßsystem erfolgen.

Bei dem dargestellten Ausführungsbeispiel erfolgt die Ist-Lage-Ermittlung der freizuschneidenden Fugen 6 durch den Aufschneidroboter selbst, der hierbei als Meßroboter arbeitet. In einer ersten Schwenkstellung des Werkzeuges ist das Meßwerkzeug 82 wirksam, mit dem die genaue Ist-Lage der Karosserie 1 bzw. der Fugen 6 in Relation zum Aufschneidroboter erfaßt werden kann. Das in der zweiten Schwenkstellung des Zweifachwerkzeuges wirksam werdende Werkzeugteil ist als ein Schneid- und Andrück-Werkzeug 83 ausgebildet, welches ein Messer 79 zum Durchtrennen der Schutzfolie 23 im Fugenbereich (vgl. Figur 2c) und eine rotierende Bürste 87 zum Andrücken der Schnittränder aufweist. Das Messer 79 umfaßt eine Klinge 84 und eine Klingenhalterung 94, so daß ein einfacher Wechsel der Klinge 84 möglich ist. Die rotierende Bürste 87 ist von einem Elektromotor 88 aus über ein drehzahlreduzierendes Winkelgetriebe antreibbar. Alternativ zu der dargestellten rotierenden Bürste 87 kann zum Andrücken der Schnittränder auch eine einen auf die Schnittränder gerichteten Luftstrom ausstrahlende Luftdüse verwendet werden.

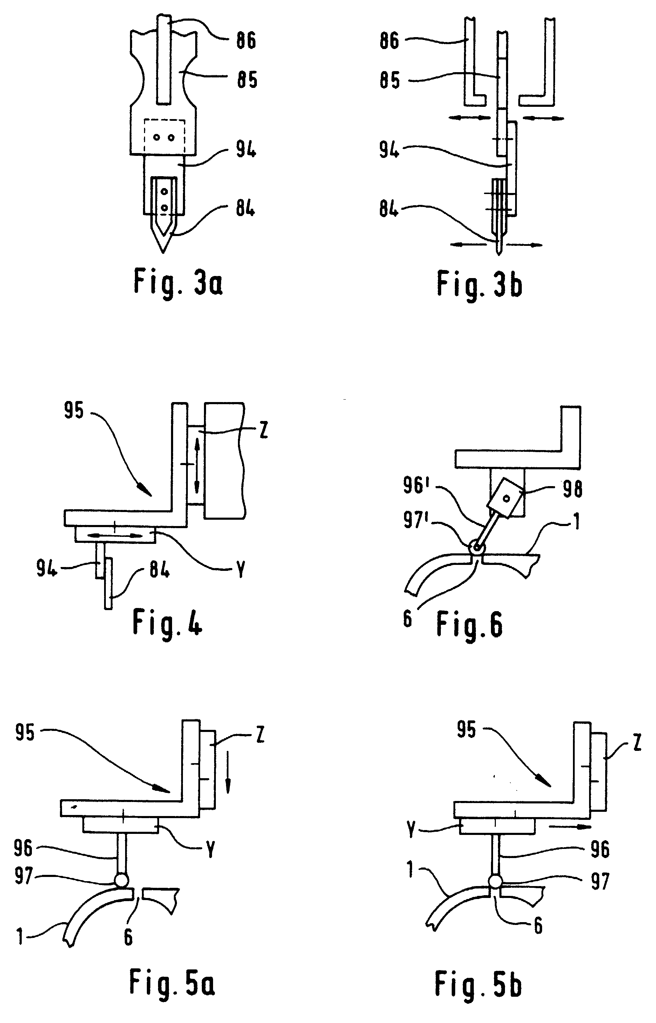

Das Messer 79 ist quer zur Schneid- und Bewegungsrichtung mittels einer Blattfeder 85 elastisch aufgehängt, so daß es etwaigigen Lageabweichungen der Fuge von der roboterseitig vorgegebenen Führungsbahn zwanglos folgen kann. Damit andererseits das Messer nicht unzulässig stark seitlich ausweichen kann, ist der Bewegungsspielraum durch ein Paar von das Messer beiderseits übergreifenden Anschlagarmen 86 eingeengt, wobei der Bewegungsspielraum durch Justierschrauben 92 vorgegeben werden kann. Beim Einstechen des Messers in die Fuge muß jedoch eine eindeutige Lage des Messers sichergestellt und der Bewegungsspielraum aufgehoben werden. Deshalb können die um eine Schwenkachse 91 schwenkbaren Anschlagarme mittels eines kleinen, über einen Spreizkeil an den gegenüberliegenden Hebelarmen angreifenden Pneumatikzylinders 90 zusammengefahren und das Messer zwischen ihnen lagedefiniert eingespannt werden, was vorübergehend während des Einstechens des Messers in eine Fuge geschieht. Die Halterung des Messers 79 an der Blattfeder 85 ist auch durch die Darstellung der Figur 3 in Seitenansicht (Figur 3a) und Frontansicht (Figur 3b) veranschaulicht, wobei aus Gründen der Darstellungsvereinfachung in Figur 3 die Justierschrauben 92 nicht dargestellt sind.

Zum Schutz der Lackierung im Fugenbereich vor Verkratzungen durch die hindurchstreichende Klinge 84 des Messers 79 sind deren beide Flachseiten mit einer Kunststoffbeschichtung 93 versehen, die einen unmittelbaren Kontakt des harten Klingenwerkstoffes mit der Lackierung verhindern (vgl. Figur 2). Der beiderseits auf die Klinge 84 aufgebrachte Kunststoff 93 sollte gute Gleiteigenschaften gegenüber ausgehärteten Fahrzeuglacken und gegenüber der zu applizierenden Folie 23 besitzen. Was die Beschichtungsstärke und Verschleißbeständigkeit des Beschichtungskunststoffes 93 anbelangt, so sollte die Beschichtung mindestens die Lebensdauer der Messerklinge 84 erreichen, auch wenn diese mehrmals nachgeschliffen wird. Aus Gründen des Anschärfens der Klinge 84 ist die Kunststoffbeschichtung 93 der Klinge 84 gegenüber der Schneidkante 99 zurückversetzt.

Auch im Zusammenhang mit dem Schneidwerkzeug 83 sei erwähnt, daß hier im Hinblick auf ein rationelles Arbeiten ein rascher Wechsel des Messers 79 möglich sein muß, weil dieses aufgrund der großen aufzuschneidenden Folienlängen einem entsprechenden Verschleiß unterliegt. Zweckmäßig werden auch hier Maßnahmen zur Standzeiterhöhung eingesetzt, wie besserer Messerwerkstoff, Hartbeschichtung der Schneide oder höhere Verschleißreserve beispielsweise durch Einsatz von drehbaren Rundmessern. Der Vollständigkeit halber sei im Zusammenhang mit diesem Roboterwerkzeug noch einmal erwähnt, daß es im Schadensfall rasch ausgetauscht werden muß und alle Verbindungen mechanischer, elektrischer oder fluidischer Art für einen Schnellwechsel gestaltet sein müssen. Auch das Meßwerkzeug 82 alleine sollte rasch innerhalb des Doppelwerkzeuges 82/83 ausgetauscht werden können.

Figur 4 zeigt in schematischer Darstellung die Lagerung des Messers 79 an einem zweiachsigen Schwimmschlitten 95, der an dem Arbeitsarm 81 des Aufschneidroboters angeordnet ist. Der zweiachsige Schwimmschlitten 95 umfaßt einen senkrecht zur Folienebene verfahrbaren z-Schlitten Z sowie einen senkrecht zu dem z-Schlitten Z und quer zur Schneid- und Bewegungsrichtung verfahrbaren y-Schlitten Y. An dem y-Schlitten Y ist das Messer 79 zum Durchtrennen der Schutzfolie 23 angeordnet. Das Andrück-werkzeug (rotierende Bürste 87) ist in'der Darstellung der Figur 4 aus Gründen der Übersichtlichkeit nicht wiedergegeben - es kann ebenfalls an dem Y-Schlitten in Schneid- und Bewegungsrichtung hinter dem Messer 79 oder auch, da es über eine ausreichende Breite zum Abdecken möglicher Toleranzen verfügt, direkt an dem Arbeitsarm 81 angebracht sein.

Im Betrieb wird nach der Ermittlung der Einstichstelle durch eine geeignete Meßeinrichtung des Aufschneidroboters der z-Schlitten Z festgelegt, so daß der Arbeitsarm nur noch eine definierte kurze Strecke zum Durchstechen der Schutzfolie in z-Richtung verfahren muß. Beim Einstechen ist der y-Schlitten Y vorteilhafterweise ebenfalls festgelegt, wird jedoch vor Beginn des Schneidvorgangs gelöst, so daß er durch seine Schwimmbewegung in y-Richtung eventuelle Fugentoleranzen bzw. Abweichungen im Fugenverlauf von der Soll-Lage ausgleichen kann, wobei die Messerklinge 84 in jeder Stellung des y-Schlittens Y senkrecht zur Folienebene steht. Die Anordnung des Messers 79 an dem beschriebenen zweiachsigen Schwimmschlitten 95 kann ohne oder mit der Halterung an einer Blattfeder sowie der weiteren Komponenten, wie sie vorstehend unter Bezugnahme auf die Figuren 1,2 und 3 beschrieben wurde, erfolgen. Natürlich erfüllt auch eine Halterung des Messers 79 an einem nur in y-Richtung aktiven einachsigen Schwimmschlitten in hinreichender Weise die gestellten Anforderungen.

Figur 5 zeigt eine erfindungsgemäße Meßeinrichtung, mittels welcher die Einstechposition der Messerklinge 84 ermittelt werden kann. Dazu ist an einem zweiachsigen Schwimmschlitten 95, wie er vorstehend unter Bezugnahme auf Figur 4 erläutert ist, an dem y-Schlitten Y im wesentlichen senkrecht zur Folienebene ein taktiler Taster 96 mit einer abgerundeten Tastspitze 97 angeordnet. Zum Auffinden der freizuschneidenden Fuge 6 wird der an dem Arbeitsarm 81 befestigte zweiachsige Schwimmschlitten 95 zur Karosserie 1 hin abgesenkt, bis der Taster 96 mit seiner Tastspitze 97 die Karosserie 1 beaufschlägt (Figur 5a). Daraufhin führt der Aufschneidroboter mit seinem Arbeitsarm 81 eine im wesentlichen quer zu der Ausrichtung der zu ermittelnden Fuge 6 verlaufende Bewegung durch bis der taktile Taster 96 mit seiner Tastspitze 97 in die Fuge 6 eingreift. Dies wird dadurch registriert, daß bei einer Weiterbewegung des zweiachsigen Schwimmschlittens 95 der y-Schlitten Y einen Ausschlag erfährt und anzeigt. Die derart ermittelte Stellung des y-Schlittens Y wird dann dazu benutzt, um die Ist-Lage der Fuge 6 zu ermitteln und das Messer 79 durch die Schutzfolie 23 zu stechen. Vorteilhafterweise ist das Messer 79 fluchtend in Schneid- und Bewegungsrichtung hinter dem taktilen Taster 96 angeordnet, und zwar vorzugsweise ebenfalls an dem y-Schlitten Y. Dazu sind sowohl der taktile Taster 96 als auch das Messer 79 separat voneinander in z-Richtung verstellbar, so daß durch Ausfahren des Messers 79 in z-Richtung die Schutzfolie durchstochen wird, und nach Hochfahren des taktilen Tasters 96 ebenfalls in z-Richtung der Schneidvorgang beginnen kann. Alternativ kann die Auslenkung des y-Schlittens Y gegenüber der im Aufschneidroboter abgespeicherten Soll-Lage ermittelt und der Einstechpunkt des Messers entsprechend korrigiert werden.

Eine andere Möglichkeit für eine Meßeinrichtung zum Auffinden der freizuschneidenden Fuge 6 ist in Figur 6 dargestellt. Demnach ist ein mit einem taktilen Meßsystem verbundener Taster 96' mit einer Tastrolle 97' vorgesehen. Der Taster 96' ist mittels einer geeigneten Halterung mit dem Arbeitsarm 81 des Aufschneidroboters verbunden, wobei er an der Halterung 98 quer zur Schneid- und Bewegungsrichtung verschwenkbar angeordnet ist.

Zum Auffinden der freizuschneidenden Fuge 6 wird der Taster 96' wie vorstehend beschrieben auf die Karosserie 1 abgesenkt und im wesentlichen quer zu der zu ermittelnden Fuge 6 verfahren. Sobald der Taster 96' mit seiner Tastrolle 97' in die Fuge 6 eingreift, tritt bei einer Weiterbewegung des Arbeitsarms 81 eine Verschwenkung des Tasters 96' auf, die an der Halterung 98 mittels eines geeigneten Sensors registriert wird. Der Arbeitsarm 81 beendet seine im wesentlichen quer zu der Fuge 6 verlaufende Bewegung und die Stellung des Taster 96' wird als Einstechposition für das Messer 79 gespeichert. Danach wird der Taster 96' aus seiner die Karosserie 1 beaufschlagenden Position zurückgefahren/zurückgeschwenkt und das Schneid- und Andrück-Werkzeug wird in seine Wirkstellung gebracht und die Messerklinge 84 an der gespeicherten Position durch die Schutzfolie 23 gestochen.

Natürlich kann an dem in Figur 6 dargestellten Taster 96' auch eine abgerundete Tastspitze (vgl. Figur 5) verwendet werden, genauso wie die Tastrolle 97' auch in Verbindung mit dem in Figur 5 gezeigten Taster 96 Verwendung finden kann.

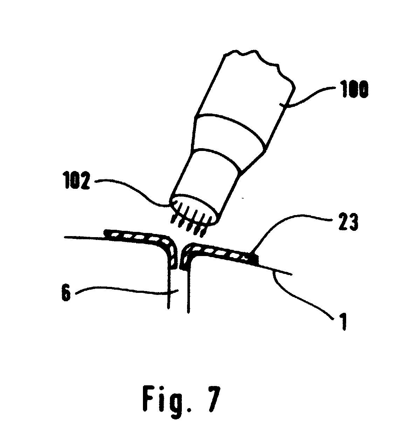

Figur 7 zeigt in stark schematischer Darstellung ein weiteres Ausführungsbeispiel einer erfindungsgemäßen Vorrichtung zum Durchtrennen von Schutzfolie. Die dargestellte Vorrichtung umfaßt eine an einem nicht näher dargestellten Arbeitsarm eines beschriebenen Aufschneidroboters angeordnete Luftdüse 100 mit einer Luftaustrittsöffnung 102. Die Luftdüse 100 ist mit ihrer Luftaustrittsöffnung im wesentlichen senkrecht zur Karosserieoberfläche ausgerichtet und wird mittels des Arbeitsarms des Aufschneidroboters beabstandet zu der Karosserie 1 über einer mit Schutzfolie 23 überklebten, freizuschneidenden Fuge 6 entlangbewegt.

Die Luftdüse 100 strahlt durch ihre Luftaustrittsöffnung 102 einen diffusen Luftstrahl aus, der durch die Pfeile der Figur 7 veranschaulicht ist. Die Temperatur der aus der Luftaustrittsöffnung 102 austretenden Luft ist so gewählt, daß in Zusammenwirkung mit der Austrittsgeschwindigkeit der Luft, d.h. des durch die Luft auf die Folie ausgeübten Drucks, ein Erweichen des Kunststoffs und dessen Durchtrennung erfolgt. Bei der Ausführung der Erfindung wird der Fachmann daher im Rahmen seines Fachwissens die in Wechselwirkung stehenden Parameter Temperatur, Druck, Düsenform und Düsenabstand zur Schutzfolie aufeinander abstimmen. Bei einem sehr diffusen Luftstrom mit relativ niedrigem Druck entspricht daher die Temperatur der austretenden Luft mindestens der Schmelztemperatur des Kunststoffs der Schutzfolie 23 (> 140°C). Bei den von der Anmelderin durchgeführten Versuchen betrug die Temperatur ca. 100° bis 160° C in Verbindung mit einem Druck von 6 bis 1 bar. Die Bewegung der Luftdüse 100 erfolgt mit einer Geschwindigkeit, die ausreichend langsam ist, daß der Kunststoff im Bereich der Fuge 6 durch Erwärmen (Erweichen bzw. Schmelzen) und Einwirkung des Luftstroms durchtrennt wird, so daß nach Beendigung des Bewegungsablaufs der Luftdüse 100 entlang der Fuge 6 diese freigeschnitten ist.

Der Vorteil der in Figur 7 dargestellten Durchtrennungsvorrichtung besteht darin, daß kein separates Andrückwerkzeug notwendig ist, da die Schnittränder der Schutzfolie 23 durch den Luftstrom nicht nur durchtrennt, sondern gleichzeitig an die Karosserie 1 angedrückt werden. Des weiteren ist keine zusätzliche Meßeinrichtung zur Feinermittlung der Spaltlage erforderlich, da durch den diffusen Luftstrom mögliche Toleranzen des genauen Fugenverlaufs ausgeglichen werden.

Zum Aufschneiden von Schutzfolie, die eine Sicke der Karosserie überdeckt, kann vorteilhafterweise im Bereich vor der Luftaustrittsöffnung 102 der Luftdüse 100 ein Dorn aus einem Material guter Wärmeleitfähigkeit angeordnet sein, der durch die Schutzfolie 23 gestochen wird, wenn die Sicke so breit ist, daß die Schutzfolie 23 durch den durch den Luftstrom ausgeübten Impuls nicht durchtrennt werden kann. Das Durchstechen der Schutzfolie 23 durch den Dorn erfolgt beispielsweise durch entsprechendes Absenken der Luftdüse 100. Vorteilhafterweise ist der Dorn an der Luftdüse 100 ausfahrbar angeordnet, so daß der Abstand zwischen der Schutzfolie und der Luftdüse zum Durchstechen der Schutzfolie mit dem Dorn nicht verändert werden muß.

## Patentansprüche

1. Verfahren zum Durchtrennen von Schutzfolie im Bereich überklebter Fugen und Sicken, insbesondere von Kfz-Karosserien, mit einem frei programmierbaren Aufschneidroboter mit mindestens fünf Freiheitsgraden der Bewegung, der mittels eines an seinem Arbeitsarm (81) angeordneten Schneidwerkzeugs (83, 79) die Schutzfolie (23) an einem Ende einer freizuschneidenden Fuge (6) oder Sicke durchsticht und durch eine Bewegung des Schneidwerkzeugs (83, 79) entlang einer mit dem Verlauf der Fuge (6) oder Sicke zusammenfallenden Schneid- und Bewegungsrichtung die Schutzfolie (23) im wesentlichen über die gesamte Länge der Fuge (6) oder Sicke durchtrennt, wobei die Schnittränder der durchtrennten Schutzfolie (23) mittels eines dem Schneidwerkzeug (83, 79) an dem Arbeitsarm (81) nachgeordneten Andrückwerkzeug (83, 87) an die Karosserie (1) angedrückt werden.

2. Verfahren nach Anspruch 1, dadurch gekennzeichnet, daß als Schneidwerkzeug ein Messer (79) und als Andrückwerkzeug eine rotierende Bürste (87) oder eine Luftdüse (100) vorgesehen sind.

3. Verfahren nach Anspruch 1 oder 2, dadurch gekennzeichnet, daß das Schneidwerkzeug (83, 79) im Moment des Durchstechens der Schutzfolie (23) in definierter Ausrichtung bezüglich des Arbeitsarms (81) gehalten wird und während des Schneidvorgangs bei Berührung von die Fuge (6) oder Sicke begrenzenden Karosserieteilen quer zur Schneid- und Bewegungsrichtung nachgiebig gehalten wird.

4. Verfahren nach einem der Ansprüche 1 bis 3, dadurch gekennzeichnet, daß das Schneidwerkzeug (83, 79) bei einem Auftreffen auf ein Hindernis während des Schneidvorgangs aus seiner die Schutzfolie (23) durchstechenden Position zurückgezogen wird.

5. Verfahren nach einem der Ansprüche 1 bis 4, dadurch gekennzeichnet, daß vor dem Schneidvorgang die Ist-Lage der freizuschneidenden Fuge (6) mittels einer dem Schneid- und Andrück-Werkzeug (83, 79, 87) zugeordneten geeigneten Meßeinrichtung festgestellt wird.

6. Verfahren nach Anspruch 5, dadurch gekennzeichnet, daß zum Feststellen der Ist-Lage der freizuschneidenden Fuge (6) ein an dem Arbeitsarm (81) angeordneter Taster (96, 96') im Bereich eines ersten Endes der freizuschneidenden Fuge (6) auf die Karosserie (1) abgesenkt und im wesentlichen quer zu der Fuge (6) verfahren wird, bis er in die Fuge (6) eingreift.

7. Verfahren nach Anspruch 6, dadurch gekennzeichnet, daß die ermittelte Position des Tasters (96') von dem Aufschneidroboter gespeichert wird und das Schneidwerkzeug (83, 79) nach dem Einholen des Tasters (96') an der gespeicherten Position durch die Schutzfolie (23) gestochen wird.

8. Verfahren nach Anspruch 6, dadurch gekennzeichnet, daß das Schneidwerkzeug (83, 79) fluchtend mit dem Taster (96) angeordnet ist und nach dem Eingreifen des Tasters (96) in die Fuge (6) ausgefahren und durch die Schutzfolie gestochen wird.

9. Verfahren zum Durchtrennen von Schutzfolie im Bereich überklebter Fugen und Sicken, insbesondere von Kfz-Karosserien, mit einem frei programmierbaren Aufschneidroboter mit mindestens fünf Freiheitsgraden der Bewegung, der mittels eines aus einer an seinem Arbeitsarm (81) angeordneten Luftdüse (100) austretenden diffusen Luftstrahls, dessen Temperatur mindestens der Schmelztemperatur des Kunststoffs der Schutzfolie (23) entspricht, die Schutzfolie (23) gleichzeitig durchtrennt und deren Schnittränder an die Karosserie (1) andrückt.

10. Verfahren nach Anspruch 9, dadurch gekennzeichnet, daß im Bereich vor der Luftaustrittsöffnung (102) der Luftdüse (100) ein Dorn aus einem Material guter Leitfähigkeit angeordnet ist, der beim Freischneiden einer Sicke ausgefahren und durch die die Sicke überspannende Schutzfolie (23) gestochen wird.

11. Vorrichtung zum Durchtrennen von Schutzfolie im Bereich überklebter Fugen und Sicken, insbesondere von Kfz-Karosserien, gekennzeichnet durch einen frei programmierbaren Aufschneidroboter mit mindestens fünf Freiheitsgraden der Bewegung, an dessen Arbeitsarm (81) ein Schneid- und Andrück-Werkzeug (83) angebracht ist, das ein Messer (79) mit einer Klinge (84) zum Durchtrennen der Schutzfolie (23) im Bereich überklebter Fugen (6) und Sicken sowie eine rotierende Bürste (87) oder eine Luftdüse (100) zum Andrücken der Schnittränder aufweist.

12. Vorrichtung nach Anspruch 11, dadurch gekennzeichnet, daß die Flachseiten der Klinge des Messers (84) jeweils eine Kunststoffbeschichtung (93) aufweisen.

13. Vorrichtung nach Anspruch 11 oder 12, dadurch gekennzeichnet, daß das Messer (84) in dem Schneid- und Andrück-Werkzeug (83) mittels einer Blattfeder (84) quer zur Schneid- und Bewegungsrichtung elastisch aufgehängt ist.

14. Vorrichtung nach Anspruch 13, gekennzeichnet durch verstellbare Anschlagarme (86) zur Beaufschlagung des Messers (84) und/oder der Blattfeder (85) quer zur Schneid- und Bewegungsrichtung.

15. Vorrichtung nach einem der Ansprüche 11 bis 14, dadurch gekennzeichnet, daß das Messer (84) beim Auftreffen auf ein Hindernis während des Schneidvorgangs in Schneidrichtung nach hinten verschwenkbar ist.

16. Vorrichtung nach einem der Ansprüch 11 bis 15, dadurch gekennzeichnet, daß das Messer (84) senkrecht zur Folienebene sowie quer zur Schneid- und Bewegungsrichtung verstellbar an einem zweiachsigen Schwimmschlitten angeordnet ist.

17. Vorrichtung nach einem der Ansprüche 11 bis 16, dadurch gekennzeichnet, daß das Schneid- und Andrück-Werkzeug (83) in unterschiedliche Arbeitsstellungen versetzbar ist und daß eine dem Schneid- und Andrück-Werkzeug (83) zugeordnete Meßeinrichtung zur Erfassung der Ist-Lage der freizuschneidenden Fuge (6) oder Sicke der Karosserie (1) innerhalb des Arbeitsraumes des Aufschneidroboters (80) vorgesehen ist.

18. Vorrichtung nach Anspruch 17, dadurch gekennzeichnet, daß die Meßeinrichtung ein an dem Schneid- und Andrück-Werkzeug (83) angeordnetes Meßwerkzeug (82) ist und daß das Schneid- und Andrück-Werkzeug (83) in unterschiedliche Arbeitsstellungen schwenkbar ist, wobei in einer ersten Schwenkstellung das Meßwerkzeug (82) wirksam ist und in einer zweiten Schwenkstellung das Schneid- und Andrück-Werkzeug (83) wirksam ist.

19. Vorrichtung nach Anspruch 17, dadurch gekennzeichnet, daß als Meßeinrichtung ein an einem zweiachsigen Schwimmschlitten (95) senkrecht zur Folienebene sowie quer zur Schneid- und Bewegungsrichtung verstellbarer taktiler Taster (96) vorgesehen ist.

20. Vorrichtung nach Anspruch 19, dadurch gekennzeichnet, daß das Messer (84) in Schneid- und Bewegungsrichtung fluchtend mit dem taktilen Taster (96) an dem den taktilen Taster (96) haltenden zweiachsigen Schwimmschlitten (95) angeordnet ist, wobei der taktile Taster (96) und das Messer (84) jeweils senkrecht zur Folienebene ausfahrbar sind.

21. Vorrichtung nach Anspruch 17, dadurch gekennzeichnet, daß als Meßeinrichtung ein quer zur Schneid- und Bewegungsrichtung verschwenkbarer Taster (96') vorgesehen ist.

22. Vorrichtung nach einem der Ansprüche 19 bis 21, dadurch gekennzeichnet, daß der Taster (96, 96') eine abgerundete Tastspitze (97) aufweist.

23. Vorrichtung nach einem der Ansprüche 19 bis 21, dadurch gekennzeichnet, daß der Taster (96, 96') eine Tastspitze mit einer dem Spalt angepaßten Tastrolle (97') aufweist.

24. Vorrichtung nach Anspruch 17, dadurch gekennzeichnet, daß die Meßeinrichtung entlang der Karosserie angeordnete Meßpunkte detektierende optische, akkustische und/oder induktive Sensoren zur Ermittlung der Abweichung der Ist-Lage der Karosserie von ihrer Soll-Lage umfaßt.

25. Vorrichtung zum Durchtrennen von Schutzfolie im Bereich überklebter Fugen und Sicken, insbesondere von Kfz-Karosserien, gekennzeichnet durch einen frei programmierbaren Aufschneidroboter mit mindestens fünf Freiheitsgraden der Bewegung, an dessen Arbeitsarm (81) eine Luftdüse (100) zum diffusen Ausstrahlen von Heißluft vorgesehen ist.

26. Vorrichtung nach Anspruch 25, gekennzeichnet durch einen im Bereich vor der Luftaustrittsöffnung (102) der Luftdüse (100) angeordneten Dorn aus einem Material guter Wärmeleitfähigkeit.

## Claims

1. A method of cutting through protective film in the areas of glued-over joints and beads, particularly on motor vehicle bodies, with a freely programmable cutting-open robot with at least five degrees of freedom of movement and which, by means of a cutting tool (83, 79) disposed on its working arm (81), pierces the protective film (23) at one end of a joint (6) or bead which is to be cut free and which, by a movement of the cutting tool (83, 79) along a cutting and movement direction coinciding with the course of the joint (6) or bead, cuts through the protective film (23) substantially over the entire length of the joint (6) or bead, the cut edges of the parted protective film (23) being pressed down onto the body work (1) by a pressure-applying tool (83, 87) disposed downstream of the cutting tool (83, 79) on the working arm (81).

2. A method according to claim 1, characterised in that the cutting tool provided is a knife (79) while the pressure-applying tool is a rotating brush (87) or an air jet (100).

3. A method according to claim 1 or 2, characterised in that the cutting tool (83, 79), at the moment of piercing the protective film (23), is supported in a clearly defined alignment in respect of the working arm (81) and during the cutting process, upon contact with parts of the body work bounding the joint (6) or bead, is resiliently supported crosswise to the cutting and movement direction.

4. A method according to one of claims 1 to 3, characterised in that upon striking an obstacle during the cutting process, the cutting tool (83, 79) is retracted from its position in which it is piercing the protective film (23).

5. A method according to one of claims 1 to 4, characterised in that prior to the cutting process, the actual position of the joint (6) which is to be cut open is established by a suitable measuring device associated with the cutting and pressure-applying tool (83, 79, 87).

6. A method according to claim 5, characterised in that for establishing the actual position ofthe joint (6) which is to be cut open, there is disposed on the working arm (81) a sensor (96, 96') which, in the region of a first end of the joint (6) which is to be cut open, is lowered onto the body work (1) and which is moved substantially at right-angles to the joint (6) until it engages the joint (6).

7. A method according to claim 6, characterised in that the ascertained position of the sensor (96') is stored by the cutting-open robot and, after retraction of the sensor (96') to the stored position, the cutting tool (83, 79) pierces through the protective film (23).

8. A method according to claim 6, characterised in that the cutting tool (83, 79) is disposed flush with the sensor (96) and is retracted once the sensor (96) engages the joint (6) and is then pushed through the protective film.

9. A method of cutting through protective film in the area of glued-over joints and beads, particularly in motor vehicle bodies, with a freely programmable cutting-open robot with at least five degrees of freedom of movement and which, by means of a diffuse jet of air emerging from an air jet (100) disposed on its working arm (81) and the temperature of which corresponds at least to the melting temperature of the synthetic plastics material of the protective film (23), simultaneously cuts through the protective film (23) and presses its cut edges against the body work (1).

10. A method according to claim 9, characterised in that in the area upstream of the orifice (102) of emergence of air from the air jet (100), a mandrel of a material having good conductive properties is disposed and which, when a bead is being cut clear, pierces the protective film (23) which covers the bead.

11. A device for cutting through protective film in the area of glued-over joints and beads, particularly of motor vehicle bodies, characterised by a freely programmable cutting-open robot with at least five degrees of freedom of movement and on the working arm (81) of which there is a cutting and pressure-applying tool (83) which comprises a knife (79) with a blade (84) for cutting through the protective film (23) in the area of glued-over joints (6) and beads as well as a rotating brush (87) or an air jet (100) for applying pressure to the cut edges.

12. A device according to claim 11, characterised in that the flat sides of the blade of the knife (84) respectively have a coating (93) of synthetic plastics material.

13. A device according to claim 11 or 12, characterised in that the knife (84) is suspended resiliently in the cutting and pressure-applying tool (83) by means of a leaf spring (84) crosswise to the cutting and movement direction.

14. A device according to claim 13, characterised by adjustable abutment arms (86) to act upon the knife (84) and/or the leaf spring (85) crosswise to the cutting and movement direction.

15. A device according to one of claims 11 to 14, characterised in that upon encountering an obstacle, the knife (84) is pivotable to the rear in the cutting direction during the cutting process.

16. A device according to one of claims 11 to 15, characterised in that the knife (84) is disposed on a biaxial floating carriage for adjustment at right-angles to the film plane and also crosswise to the cutting and movement direction.

17. A device according to one of claims 11 to 16, characterised in that the cutting and pressure-applying tool (83) can be displaced into various working positions and in that a measuring device for ascertaining the actual position of the joint (6) or bead on the body work (1) which is to be cut free and which is associated with the cutting and pressure-applying tool (83) is provided within the working space of the cutting-open robot (80).

18. A device according to claim 17, characterised in that the measuring means is a measuring tool (82) disposed on the cutting and pressure-applying tool (83) and in that the cutting and pressure-applying tool (83) is pivotable into various working positions whereby in a first pivoted position the measuring tool (82) is effective while in a second pivoted position the cutting and pressure-applying tool (83) is effective.

19. A device according to claim 17, characterised in that the measuring device provided is a tactile sensor (96) adjustable at right-angles to the film plane and also at right-angles to the cutting and movement direction and which is disposed on a biaxial carriage (95).

20. A device according to claim 19, characterised in that, in the cutting and movement direction, the knife (84) is aligned with the tactile sensor (96) on the biaxial carriage (94) supporting the tactile sensor (96), whereby the tactile sensor (96) and the knife (84) can be extended respectively at right-angles to the film plane.

21. A device according to claim 17, characterised in that the measuring device provided is a sensor (96') adapted to pivot crosswise to the cutting and movement direction.

22. A device according to one of claims 19 to 21, characterised in that the sensor (96, 96') comprises a rounded-off sensoring tip (97).

23. A device according to one of claims 19 to 21, characterised in that the sensor (96, 96') comprises a sensing tip with a sensing roller (97') adapted to the gap.

24. A device according to claim 17, characterised in that the measuring device comprises visual, acoustic and/or inductive sensors for detecting measurement points disposed along the body work, for ascertaining any deviation of the actual position of the body from its desired position.

25. A device for cutting through protective film in the area of glued-over joints and beads, particularly on motor vehicle bodies, characterised by a freely programmable cutting-open robot with at least five degrees of freedom of movement, and on the working arm (81) of which there is an air jet (100) for the diffuse irradiation of hot air.

26. A device according to claim 25, characterised by a mandrel of a material of good heat conductivity which is disposed upstream of the air outlet orifice (102) of the air jet (100).

## Revendications

1. Procédé pour sectionner du film protecteur dans la zone où il est collé en recouvrement de joints ou de nervures en creux, notamment de carrosseries de véhicules automobiles, à l'aide d'un robot de coupe à au moins cinq degrés de liberté du mouvement et à commande librement programmable, qui, au moyen d'un outil de coupe (83, 79) disposé sur son bras de travail (81), transperce le film protecteur (23) à une extrémité d'un joint (6) ou d'une nervure en creux devant être dégagé par coupe, et qui, par un mouvement de l'outil de coupe (83, 79) le long d'une direction de coupe et de mouvement coïncidant avec le tracé du joint (6) ou de la nervure en creux, sectionne le film protecteur (23) sensiblement sur toute la longueur du joint (6) ou de la nervure en creux, les bords de coupe du film protecteur (23) sectionné étant pressés sur la carrosserie (1), au moyen d'un outil d'application (83, 87) placé à la suite de l'outil de coupe (83, 79) sur le bras de travail (81).

2. Procédé selon la revendication 1, **caractérisé** en ce qu'en guise d'outil de coupe, il est prévu un couteau (79) et en guise d'outil d'application, une brosse rotative (87) ou une buse d'air (100).

3. Procédé selon la revendication 1 ou 2, **caractérisé** en ce que l'outil de coupe (83, 79), à l'instant du transpercement du film protecteur (23), est maintenu dans une orientation définie par rapport au bras de travail (81), et, durant l'opération de coupe, est maintenu de manière à pouvoir fléchir transversalement à la direction de coupe et de mouvement, s'il entre en contact avec des parties de carrosserie délimitant le joint (6) ou la nervure en creux.

4. Procédé selon l'une des revendications 1 à 3, **caractérisé** en ce que l'outil de coupe (83, 79), s'il bute sur un obstacle durant l'opération de coupe, est retiré de sa position de transpercement du film protecteur (23).

5. Procédé selon l'une des revendications 1 à 4, **caractérisé** en ce qu'avant l'opération de coupe on détermine la position réelle du joint (6) à dégager par coupe, au moyen d'un dispositif de mesure approprié, associé à l'outil de coupe et d'application (83, 79, 87).

6. Procédé selon la revendication 5, **caractérisé** en ce que pour déterminer la position réelle du joint (6) à dégager par coupe, un palpeur (96, 96') placé sur le bras de travail (81), est abaissé sur la carrosserie (1) dans la zone d'une première extrémité du joint (6) à dégager par coupe, et est déplacé sensiblement de manière transversale au joint (6) jusqu'à ce qu'il s'engage dans le joint (6).

7. Procédé selon la revendication 6, **caractérisé** en ce que la position du palpeur (96, 96') ayant été déterminée, est mémorisée par le robot de coupe, et l'outil de coupe (83, 79), après retrait du palpeur (96'), est amené à transpercer le film protecteur (23) au niveau de la position mémorisée.

8. Procédé selon la revendication 6, **caractérisé** en ce que l'outil de coupe (83, 79) est disposé en alignement avec le palpeur (96), et est extrait après l'engagement du palpeur (96) dans le joint (6), pour venir transpercer le film protecteur.

9. Procédé pour sectionner du film protecteur dans la zone où il est collé en recouvrement de joints ou de nervures en creux, notamment de carrosseries de véhicules automobiles, à l'aide d'un robot de coupe à au moins cinq degrés de liberté du mouvement et à commande librement programmable, qui, au moyen d'un jet d'air diffus dont la température correspond au moins à la température de fusion de la matière plastique du film protecteur (23), et sortant d'une buse d'air (100) placée sur le bras de travail (81) dudit robot, sectionne le film protecteur (23) et presse simultanément ses bords de coupe contre la carrosserie (1).

10. Procédé selon la revendication 9, **caractérisé** en ce que dans la zone devant l'ouverture de sortie d'air (102) de la buse d'air (100) est disposé un poinçon en un matériau de bonne conductibilité thermique, qui, lors du dégagement par coupe d'une nervure en creux, est extrait et est amené à transpercer le film protecteur (23) recouvrant la nervure en creux.

11. Dispositif pour sectionner du film protecteur dans la zone où il est collé en recouvrement de joints ou de nervures en creux, notamment de carrosseries de véhicules automobiles, caractérisé par un robot de coupe à au moins cinq degrés de liberté du mouvement et à commande librement programmable, sur le bras de travail (81) duquel, est placé un outil de coupe et d'application (83), qui comprend un couteau (79) avec une lame (84) pour sectionner le film protecteur (23) dans la zone où il est collé en recouvrement de joints (6) et de nervures en creux, ainsi qu'une brosse (87) en rotation ou une buse d'air (100) pour l'application des bords de coupe.

12. Dispositif selon la revendication 11, **caractérisé** en ce que les faces planes de la lame du couteau (84) présentent chacune un revêtement de matière plastique (93).

13. Dispositif selon la revendication 11 ou 12, **caractérisé** en ce que le couteau (84) est suspendu de manière élastique, transversalement à la direction de coupe et de mouvement, dans l'outil de coupe et d'application (83), au moyen d'un ressort à lame (84).

14. Dispositif selon la revendication 13, **caractérisé** par des bras de butée (86) réglables, destinés à la sollicitation du couteau (84) et/ou du ressort à lame (85), transversalement à la direction de coupe et de mouvement.

15. Dispositif selon l'une des revendications 11 à 14, **caractérisé** en ce que le couteau (84), lorsqu'il bute sur un obstacle durant l'opération de coupe, peut pivoter vers l'arrière dans la direction de coupe.

16. Dispositif selon l'une des revendications 11 à 15, **caractérisé** en ce que le couteau (84) est disposé sur un chariot flottant à deux axes, de manière réglable perpendiculairement au plan du film ainsi que transversalement à la direction de coupe et de mouvement.

17. Dispositif selon l'une des revendications 11 à 16, **caractérisé** en ce que l'outil de coupe et d'application (83) peut être transféré dans différentes positions de travail, et en ce qu'il est prévu un dispositif de mesure associé à l'outil de coupe et d'application (83) pour relever la position réelle du joint (6) ou de la nervure en creux de la carrosserie (1) à dégager par coupe, à l'intérieur du domaine de travail du robot de coupe (80).

18. Dispositif selon la revendication 17, **caractérisé** en ce que le dispositif de mesure est un outil de mesure (82) disposé sur l'outil de coupe et d'application (83), et en ce qu'il est possible de faire pivoter l'outil de coupe et d'application (83) dans différentes positions de travail, l'outil de mesure (82) étant actif dans une première position de pivotement, et l'outil de coupe et d'application (83) étant actif dans une seconde position de pivotement.

19. Dispositif selon la revendication 17, **caractérisé** en ce qu'en guise de dispositif de mesure, il est prévu sur un chariot flottant (95) à deux axes, un palpeur tactile (96) réglable perpendiculairement au plan du film ainsi que transversalement à la direction de coupe et de mouvement.

20. Dispositif selon la revendication 19, **caractérisé** en ce que le couteau (84) est disposé de manière alignée avec le palpeur tactile (96) dans la direction de coupe et de mouvement, sur le chariot flottant (95) à deux axes supportant le palpeur tactile (96), le palpeur tactile (96) et le couteau (84) pouvant être extraits respectivement perpendiculairement au plan du film.

21. Dispositif selon la revendication 17, **caractérisé** en ce qu'en guise de dispositif de mesure, il est prévu un palpeur (96') pouvant pivoter transversalement à la direction de coupe et de mouvement.

22. Dispositif selon l'une des revendications 19 à 21, **caractérisé** en ce que le palpeur (96, 96') présente une pointe de palpage (97) arrondie.

23. Dispositif selon l'une des revendications 19 à 21, **caractérisé** en ce que le palpeur (96, 96') présente une pointe de palpage comportant un galet de palpage (97') adapté à l'interstice.

24. Dispositif selon la revendication 17, **caractérisé** en ce que le dispositif de mesure comprend des capteurs optiques, acoustiques et/ou inductifs détectant des points de mesure disposés le long de la carrosserie, en vue de la détermination de l'écart de la position réelle de la carrosserie par rapport à sa position de consigne.

25. Dispositif pour sectionner du film protecteur dans la zone où il est collé en recouvrement de joints ou de nervures en creux, notamment de carrosseries de véhicules automobiles, **caractérisé** par un robot de coupe à commande librement programmable, et à au moins cinq degrés de liberté du mouvement, sur le bras de travail (81) duquel est prévue une buse d'air (100) destinée à éjecter de manière diffuse de l'air chaud.

26. Dispositif selon la revendication 25, **caractérisé** par un poinçon en un matériau de bonne conductibilité thermique, disposé dans la zone devant l'ouverture de sortie d'air (102) de la buse d'air (100).
